# FASCICULE DE BREVET EUROPEEN

(11) **EP 2 828 652 B1**
(45) Date de publication et mention de la délivrance du brevet: **18.11.2015**
(21) Numéro de dépôt: 13710500.3
(22) Date de dépôt: 21.02.2013
(51) Int. Cl.: G01N 30/72, G01N 30/80, B01D 15/08, G01N 1/18, G01N 30/38

(54) **PROCEDE ET INSTALLATION POUR L'ANALYSE D'UN ELUAT DE CHROMATOGRAPHE**
VERFAHREN UND VORRICHTUNG ZUR ANALYSE EINES CHROMATOGRAPHISCHEN ELUATS
METHOD AND APPARATUS FOR ANALYZING A CHROMATOGRAPHY ELUATE

(30) Priorité: 20.03.2012 FR 1252488
(43) Date de publication de la demande: 28.01.2015
(73) Titulaire: Ecole Nationale Vétérinaire, Agroalimentaire et De L'Alimentation, Nantes-Atlantique, 44307 Nantes Cedex 3 (FR)
(72) Inventeur: VILLIERE, Angelique, F-44810 Heric (FR); LETHUAUT, Laurent, F-44810 Heric (FR); PROST, Carole, F-44980 Sainte Luce sur Loire (FR)
(74) Mandataire: Godineau, Valérie
(86) Numéro de dépôt international: PCT/FR2013/050359
(87) Numéro de publication internationale: WO 2013/140057

(56) Documents cités:
- EP-A1- 1 248 096
- WO-A1-2009/154984
- US-A1- 2007 163 962

## Description

La présente invention concerne un procédé et une installation d'analyse d'un éluat de chromatographe.

Elle concerne plus particulièrement une installation du type comprenant :
- un chromatographe en phase gazeuse équipé d'une sortie d'éluat,
- un spectromètre de masse apte à fournir en sortie des données représentatives du résultat de l'analyse spectrométrique d'au moins une quote-part de l'éluat,
- au moins un diviseur de flux comprenant deux entrées et au moins deux sorties de fluide, lesdites entrées étant l'une, couplée à une source de gaz sous pression, l'autre, dite entrée d'éluat, couplée à la sortie d'éluat du chromatographe, l'une des sorties du diviseur de flux étant couplée à l'entrée du spectromètre de masse,
- au moins un commutateur fluidique comprenant au moins une entrée et deux sorties de fluide respectivement en communication fluidique avec ladite entrée de fluide par une conduite de circulation de fluide, et un dispositif de commande du commutateur apte à permettre une alimentation sélective en fluide desdites sorties de fluide par ladite entrée de fluide, ce dispositif de commande du commutateur comprenant au moins un circuit de circulation de fluide comportant au moins deux voies de circulation raccordables en entrée à une source de gaz sous pression et débouchant respectivement en sortie dans une conduite de circulation de fluide du commutateur, lesdites voies de circulation étant des voies sélectivement obturables configurées pour, à l'état obturé de l'une des voies, laisser libre la conduite de circulation de fluide associée à ladite voie dans laquelle ladite voie débouche et permettre l'évacuation de fluide par ladite conduite de circulation de fluide.

La chromatographie en phase gazeuse est une technique très répandue pour séparer les molécules d'un mélange complexe. De plus en plus souvent, le chromatographe est couplé à un spectromètre de masse et l'ensemble chromatographe/spectromètre est également équipé d'un port olfactométrique. Une partie du flux gazeux en sortie de colonne du chromatographe est dirigée vers un cône nasal qui permet à un opérateur, encore appelé juge, de percevoir l'odeur des composés séparés. La source d'ionisation d'un spectromètre de masse associée à un chromatographe en phase gazeuse est une source d'ionisation électronique ou chimique qui nécessite un certain niveau de vide de sorte que le reste du circuit doit être adapté à cette exigence au risque sinon d'obtenir une répartition non maitrisée des flux à l'intérieur du circuit. Jusqu'à présent, dans les architectures connues, l'opérateur doit s'interrompre et, en particulier, s'écarter du cône nasal lorsque l'éluat contient des composés toxiques pour ne pas être exposé aux risques liés à cette toxicité. En outre, jusqu'à présent, les architectures proposées ne permettent pas d'identifier par spectromètre à la fois ce qui est collecté et ce qui est éliminé.

US 2007/163962 A1 (BIDLINGMEYER BRIAN A [US] ET AL, publié le 19 juillet 2007) divulgue un dispositif pour la collection de fraction en chromatographie, ledit dispositif comprenant un commutateur fluidique (202) connecté en sortie du détecteur.

Un but de la présente invention est donc de proposer une installation et un procédé du type précités dont les conceptions permettent, notamment dans le cas d'analyse sensorielle, de faire sentir à un opérateur des composés éluant d'une colonne chromatographique dans des conditions sécurisées sans perturber ni interrompre l'expérience olfactométrique.

Un autre but de la présente invention est de proposer une installation du type précité dont la conception permet de collecter et/ou d'analyser sélectivement certains composés de l'éluat tout en permettant l'identification par spectromètre de masse de ce qui est omis comme de ce qui est collecté.

A cet effet, l'invention a pour objet une installation d'analyse d'un éluat de chromatographe, ladite installation comprenant :
- un chromatographe en phase gazeuse équipé d'une sortie d'éluat,
- un spectromètre de masse apte à fournir en sortie des données représentatives du résultat de l'analyse spectrométrique d'au moins une quote-part de l'éluat,
- au moins un diviseur de flux comprenant deux entrées et au moins deux sorties de fluide, lesdites entrées étant l'une, couplée à une source de gaz sous pression, l'autre, dite entrée d'éluat, couplée à la sortie d'éluat du chromatographe, l'une des sorties du diviseur de flux étant couplée à l'entrée du spectromètre de masse,
- au moins un commutateur fluidique comprenant au moins une entrée et deux sorties de fluide respectivement en communication fluidique avec ladite entrée de fluide par une conduite de circulation de fluide, et un dispositif de commande du commutateur apte à permettre une alimentation sélective en fluide desdites sorties de fluide par ladite entrée de fluide, ce dispositif de commande du commutateur comprenant au moins un circuit de circulation de fluide comportant au moins deux voies de circulation raccordables en entrée à une source de gaz sous pression et débouchant en sortie l'une, dans une conduite, l'autre dans l'autre conduite de circulation de fluide du commutateur, lesdites voies de circulation étant des voies sélectivement obturables configurées pour, à l'état obturé de l'une des voies, laisser libre la conduite de circulation de fluide associée à ladite voie dans laquelle ladite voie débouche et permettre l'évacuation de fluide par ladite conduite de circulation de fluide, caractérisée en ce que l'entrée de fluide du ou d'au moins l'un des commutateurs fluidiques est raccordée à une sortie de fluide du diviseur de flux distincte de la sortie de flux du diviseur de flux couplée au spectromètre de masse.

Grâce au fait qu'au moins un commutateur fluidique est disposé en aval du diviseur de flux et en parallèle du spectromètre de masse, il en résulte les avantages mentionnés ci-dessus.

De préférence, les moyens d'obturation des voies sélectivement obturables du circuit de circulation de fluide du dispositif de commande du ou de chaque commutateur fluidique sont des moyens d'obturation pilotables au moins en fonction des données fournies par le spectromètre de masse.

Il en résulte la possibilité d'évacuer les produits toxiques ou au contraire de les collecter ou de les analyser.

De préférence, au moins l'une des sorties de fluide du ou d'au moins un, de préférence de chaque commutateur fluidique est équipée d'une conduite de raccordement à un port olfactométrique ou à un collecteur ou à un dispositif de détection et/ou d'analyse.

De préférence, le dispositif de détection et/ou d'analyse est choisi dans le groupe formé par les détecteurs à ionisation de flamme, les détecteurs thermoïoniques, les détecteurs à absorption électronique, les détecteurs électriques, les détecteurs à photomètre de flamme.

De préférence, la liaison fluidique entre la sortie de fluide du diviseur de flux et le spectromètre de masse d'une part, et la liaison fluidique entre la ou une sortie de fluide du diviseur de flux et l'extrémité de raccordement à un port olfactif ou à un collecteur ou à un dispositif d'analyse et/ou de détection d'une conduite de raccordement apte à être alimentée par ladite sortie de fluide d'autre part, sont configurées de sorte que le temps de parcours de l'éluat entre chaque sortie de fluide du diviseur de flux et l'extrémité de raccordement à un port olfactif, ou à un collecteur ou à un dispositif d'analyse et/ou de détection d'une conduite de raccordement apte à être alimentée par ladite sortie de fluide est identique au temps de parcours de l'éluat entre la sortie de fluide du diviseur de flux et le spectromètre de masse.

Cette configuration permet de garantir une corrélation entre les résultats du spectromètre et les composés omis ou collectés ou analysés.

De préférence, le diviseur de flux est du type à au moins trois sorties de fluide et l'installation comporte au moins deux commutateurs fluidiques dont les entrées de fluide sont respectivement raccordées à des sorties du diviseur de flux distinctes de la sortie du diviseur de flux couplée au spectromètre de masse.

Cette configuration permet un grand nombre de combinaisons en termes de collecte et d'analyse.

En particulier, de préférence, l'une des sorties de fluide d'au moins l'un des commutateurs fluidiques est équipée d'une conduite de raccordement à un port olfactif. L'autre sortie du commutateur fluidique peut être équipée d'une conduite de raccordement à un collecteur ou à un dispositif de détection et/ou d'analyse ou à un port olfactométrique ou former une fuite.

De préférence, l'une des sorties de fluide d'au moins l'un des commutateurs fluidiques est équipée d'une conduite de raccordement à un collecteur. L'autre sortie du commutateur fluidique peut être équipée d'une conduite de raccordement à un collecteur ou à un dispositif de détection et/ou d'analyse ou à un port olfactométrique ou former une fuite.

De préférence, l'installation du type dont le chromatographe est un chromatographe capillaire comprenant au moins une colonne, un système d'injection relié à la colonne, et un four logeant ladite colonne, est caractérisée en ce que le four du chromatographe loge au moins le diviseur de flux et une partie du ou des commutateurs fluidiques.

L'invention a encore pour objet un procédé d'analyse d'un éluat de chromatographe à l'aide d'une installation du type précité, caractérisé en ce que ledit procédé comprend une étape de division du flux d'éluat en au moins deux flux dits premier et deuxième flux, une étape consistant à amener au moins une partie du premier flux à un spectromètre et au moins une partie du deuxième flux à l'entrée de fluide d'un commutateur fluidique à au moins deux sorties de fluide aptes à être sélectivement alimentées en fluide à partir d'une entrée de fluide du commutateur à l'aide d'un dispositif de commande piloté en fonction de données fournies par le spectromètre.

L'invention sera bien comprise à la lecture de la description suivante d'exemples de réalisation, en référence aux dessins annexés dans lesquels :
la figure 1 représente une vue schématique d'ensemble d'une installation conforme à l'invention et
la figure 2 représente une vue schématique d'un commutateur fluidique et de son dispositif de commande.

Comme mentionné ci-dessus, l'installation comprend un chromatographe 1 en phase gazeuse. Ce chromatographe 1 comprend, de manière en soi connue :
- un système d'injection 12 qui permet d'introduire et de rendre volatil l'échantillon à analyser,
- une colonne 11, de préférence capillaire, sur laquelle les différentes molécules d'échantillon injecté se séparent suivant leur affinité avec la phase stationnaire,
- un four (non représenté) à l'intérieur duquel la colonne 11 est placée pour contrôler la température et permettre une élution contrôlée des composés injectés.

En effet, généralement, l'échantillon est introduit dans le système 12 d'injection, par exemple par l'intermédiaire d'une micro-seringue, d'une fibre de micro-extraction en phase solide ou de tout autre moyen ayant servi à collecter l'échantillon à analyser. La colonne 11 est traversée par un gaz vecteur et portée à une température appropriée à la volatilité de l'échantillon. Une fois rendus volatils, les différents composés de l'échantillon vont être emportés par le gaz vecteur à travers la colonne et se séparer les uns des autres en fonction de leur affinité avec la phase stationnaire et de la température appliquée. La phase stationnaire provoque un phénomène de rétention chromatographique avec les différents composés. Plus le composé a d'affinité avec la phase stationnaire, plus il met de temps à sortir de la colonne. L'élévation de la température dans la colonne favorise également l'élution et la séparation des composés. Dans une solution équivalente, le four peut être remplacé par d'autres moyens de chauffage de la colonne.

L'installation comporte, en sortie 13 de colonne 11 du chromatographe 1, au moins un diviseur 3 de flux. Ce diviseur 3 de flux comprend deux entrées 31, 32 et trois sorties 33, 34, 35 de fluide à travers lesquelles le flux introduit par l'entrée 32 est évacué dans des proportions contrôlées. L'entrée 31 est couplable à une source 30 de gaz sous pression et l'entrée 32, dite entrée d'éluat est couplée à la sortie 13 d'éluat du chromatographe 1. Ce diviseur 3 de flux peut par exemple se présenter sous forme d'une plaque avec plusieurs perçages. Un diviseur de flux, tel que celui commercialisé par Agilent (marque déposée) offre d'excellents résultats.

L'installation comporte encore un spectromètre 2 de masse. Ce spectromètre 2 de masse comprend une entrée 21 à laquelle est couplée l'une des sorties du diviseur de flux représentée en 33 aux figures. Ce spectromètre 2 de masse comprend, de manière en soi connue, une source d'ionisation du type électronique ou chimique qui vaporise et ionise les molécules, un analyseur qui sépare les ions en fonction de leur rapport masse/charge, un détecteur qui transforme les ions en signal électrique. Ce détecteur est donc apte à fournir, en sortie du spectromètre 2 de masse, des données représentatives du résultat de l'analyse spectrométrique d'au moins une quote-part de l'éluat. Ce détecteur est couplable à des moyens de traitement desdites données. Un tel spectromètre 2 de masse permet d'identifier les molécules constitutives de l'échantillon injecté à l'intérieur du chromatographe 1.

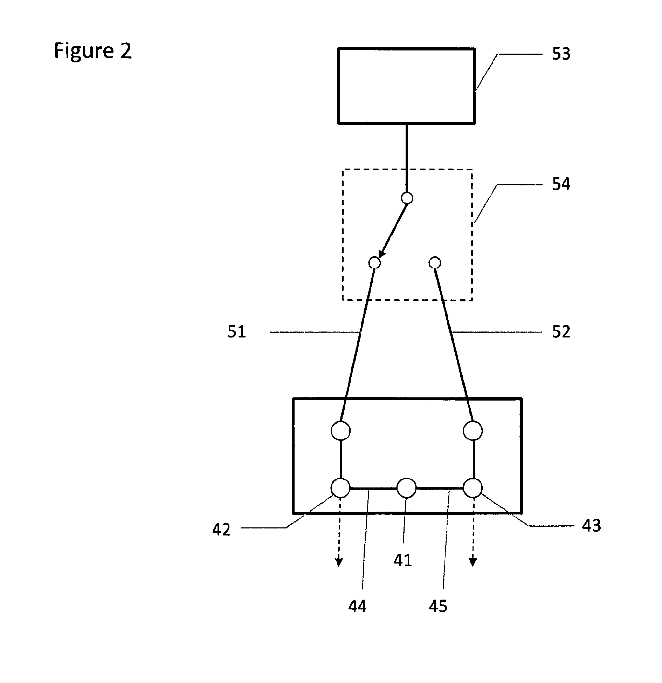

L'installation comporte encore au moins un commutateur 4 fluidique. Ce commutateur 4 fluidique comprend au moins une entrée 41 et deux sorties 42, 43 de fluide. La sortie 42 de fluide est en communication fluidique avec l'entrée 41 de fluide par une conduite 44 de circulation de fluide, et la sortie 43 de fluide est en communication fluidique avec l'entrée 41 de fluide par une conduite 45 de circulation de fluide. Ce commutateur 4 fluidique comprend encore un dispositif 5 de commande du commutateur 4 apte à permettre une alimentation sélective en fluide desdites sorties 42, 43 de fluide par ladite entrée 41 de fluide. Ce dispositif 5 de commande du commutateur 4 fluidique comprend au moins un circuit de circulation de fluide comportant au moins deux voies 51, 52 de circulation raccordables en entrée à une source 53 de gaz sous pression et débouchant en sortie l'une, représentée en 51 aux figures, dans une conduite 44, l'autre, représentée en 52 aux figures, dans l'autre conduite 45 de circulation de fluide du commutateur. Les voies 51, 52 de circulation sont des voies sélectivement obturables configurées pour, à l'état obturé de l'une des voies, laisser libre la conduite de circulation de fluide associée à ladite voie dans laquelle ladite voie débouche et permettre l'évacuation de fluide par ladite conduite de circulation de fluide. Ainsi, comme l'illustre la figure 2, lorsque le dispositif de commande est dans la position représentée à la figure 2 et que le fluide gazeux de la source de gaz 53 alimente, par la voie 51, la sortie 42 de fluide, le fluide alimentant l'entrée 41 de fluide du commutateur fluidique est évacué dudit commutateur fluidique par la sortie 43 de fluide. Le détail du fonctionnement d'un tel commutateur 4 fluidique est décrit dans le brevet US-2007/0163962.

De manière caractéristique à l'invention, l'entrée 41 de fluide du ou d'au moins l'un des commutateurs 4 fluidiques est raccordée à une sortie 34, 35 de fluide du diviseur 3 de flux distincte de la sortie 33 de flux du diviseur 3 de flux couplée au spectromètre 2 de masse.

De préférence, les moyens 54 d'obturation des voies 51, 52 sélectivement obturables du circuit de circulation de fluide du dispositif 5 de commande du ou de chaque commutateur 4 fluidique sont des moyens 54 d'obturation pilotables au moins en fonction des données fournies par le spectromètre 2 de masse.

Dans les exemples représentés, les voies 51, 52 sélectivement obturables du circuit de circulation de fluide du dispositif 5 de commande du ou de chaque commutateur 4 fluidique présentent, depuis leur débouché dans la conduite 44, 45 de circulation de fluide à laquelle elles sont associées en direction de leur zone de raccordement à la source 53 de gaz sous pression, une section individuelle suivie d'une section commune à l'autre voie et les moyens 54 d'obturation desdites voies 51, 52 sont formés par un commutateur mécanique disposé dans la zone de transition entre la section commune et les sections individuelles desdites voies.

Ce commutateur mécanique peut être formé par une électrovanne. La source 53 de gaz sous pression est par exemple une source de gaz inerte telle que de l'hélium. A nouveau, les commutateurs dits de Deans, commercialisés par Agilent (marque déposée) offrent d'excellents résultats.

Il doit être noté que lorsque le chromatographe 1 est un chromatographe capillaire du type précité, le four du chromatographe loge au moins le diviseur 3 de flux et une partie du ou des commutateurs 4 fluidiques.

A partir des éléments décrits ci-dessus, l'installation peut présenter différentes architectures plus ou moins complexes. Dans sa configuration de base, une telle installation comporte un diviseur 3 de flux et un seul commutateur 4 fluidique disposé en aval de l'une des sorties du diviseur de flux, une autre sortie du diviseur de flux étant reliée au spectromètre de masse, les autres sorties du diviseur de flux, lorsqu'elles sont présentes, étant obturées. Le commutateur 4 fluidique est, au niveau de l'une de ses sorties de fluide, par exemple la sortie 42 de fluide, raccordé, de préférence via une conduite 6 de raccordement, à un port 7 olfactométrique tandis que l'autre sortie 43 de fluide du commutateur 4 fluidique est raccordée, de préférence via une conduite 6 de raccordement, soit à un collecteur, soit à un dispositif 8 de détection et/ou d'analyse, soit à un port olfactométrique, soit est évacuée par exemple dans l'atmosphère et est appelée fuite.

Le montage avec deux ports olfactométriques en parallèle sur un même commutateur permet de procéder à des analyses olfactométriques impliquant au moins deux juges opérant l'un à la suite de l'autre sans perturber l'analyse lors du changement de juge. Dans un autre mode de réalisation, le commutateur 4 fluidique est, au niveau de l'une de ses sorties de fluide, par exemple la sortie 42 de fluide, raccordé, de préférence via une conduite 6 de raccordement, à un collecteur ou à un dispositif d'analyse tandis que l'autre sortie 43 de fluide du commutateur 4 fluidique est raccordée, de préférence via une conduite 6 de raccordement, soit à un collecteur, soit à un dispositif 8 de détection et/ou d'analyse, soit est évacuée par exemple dans l'atmosphère et est appelée fuite.

Le dispositif 8 de détection et/ou d'analyse est choisi de préférence dans le groupe formé par les détecteurs à ionisation de flamme FID, les détecteurs thermoïoniques NPD, les détecteurs à absorption électronique ECD, les détecteurs électriques TCD, les détecteurs à photomètre de flamme (FPD).

La liaison fluidique entre la sortie 33 de fluide du diviseur 3 de flux et le spectromètre 2 de masse d'une part, et la liaison fluidique entre la ou une sortie 34, 35 de fluide du diviseur 3 de flux et l'extrémité 61 de raccordement à un port 7 olfactif ou à un collecteur ou à un dispositif 8 d'analyse et/ou de détection d'une conduite 6 de raccordement apte à être alimentée par ladite sortie 34, 35 de fluide d'autre part sont configurées de sorte que le temps de parcours de l'éluat entre chaque sortie 34, 35 de fluide du diviseur 3 de flux et l'extrémité 6 de raccordement à un port 7 olfactif, ou à un collecteur ou à un dispositif 8 d'analyse et/ou de détection d'une conduite 6 de raccordement apte à être alimentée par ladite sortie 34, 35 de fluide est identique au temps de parcours de l'éluat entre la sortie 33 de fluide du diviseur 3 de flux et le spectromètre 2 de masse.

Il en résulte la possibilité d'utiliser les résultats fournis par le spectromètre de masse pour commuter le commutateur 4 fluidique lorsque, par exemple, on souhaite récupérer ou évacuer ou analyser de façon sélective des composés sur la base de leur potentialité organoleptique ou toxique.

A titre d'exemples, on peut procéder en deux temps, encore appelés "run". Dans un premier temps ou "run", l'échantillon à analyser est injecté dans la colonne du chromatographe et les résultats du spectromètre sont analysés. En fonction de ces résultats, l'opérateur décide quels sont les composés de l'échantillon qu'il souhaite voir atteindre le port olfactométrique et quels sont ceux qu'il souhaite analyser et/ou évacuer et/ou collecter. En conséquence, dans un second temps, le même échantillon est à nouveau injecté dans la colonne du chromatographe et le commutateur fluidique est piloté via son dispositif de commande en fonction du souhait de l'opérateur. Au cours de cette deuxième analyse, l'opérateur peut vérifier, à l'aide du spectromètre, que l'élution est identique et que ce qu'il a demandé en termes de commutation est conforme à ce qui est souhaité.

Dans cette configuration de base, les composés que l'on ne souhaite pas voir arriver au port olfactométrique, c'est-à-dire au nez de l'opérateur, sont dirigés vers un collecteur ou un analyseur ou une fuite. Les composés détournés du port olfactif peuvent l'être pour diverses raisons, notamment pour leur potentiel de toxicité ou leurs caractéristiques organoleptiques et/ou chimiques mais aussi pour éviter l'évaluation d'une molécule trop puissante olfactivement ou parce qu'il a été choisi de n'évaluer que certains composés. Du fait de la liaison entre sortie de diviseur 3 et spectromètre 2, une portion de l'ensemble des composés élués de la colonne est systématiquement envoyée vers le spectromètre de masse permettant ainsi l'identification potentielle de l'ensemble des composés de l'éluat, c'est-à-dire ceux qui arrivent au nez de l'opérateur comme ceux qui ont été détournés.

Bien évidemment et comme mentionné ci-dessus, le port olfactif peut être remplacé par un collecteur ou par un dispositif de détection et/ou d'analyse.

Dans ce cas, on peut, lorsque les deux sorties du commutateur fluidique sont équipées d'un collecteur, récupérer une sélection de composés sur une sortie et la partie complémentaire de cette sélection sur l'autre sortie. A nouveau, la sortie du diviseur de flux reliée au spectromètre permet d'identifier à la fois le contenu de la sélection et de la partie complémentaire de cette sélection.

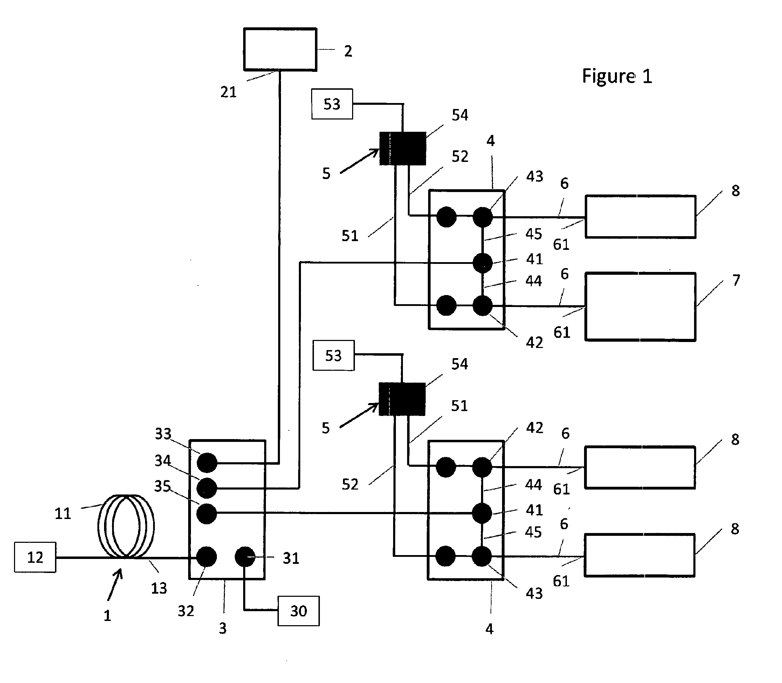

Dans une configuration plus élaborée conforme à celle représentée à la figure 1, l'installation peut comporter un diviseur de flux et deux commutateurs fluidiques. Dans ce cas, le diviseur 3 de flux est du type à au moins trois sorties 33, 34, 35 de fluide et l'installation comporte au moins deux commutateurs 4 fluidiques dont les entrées de fluide sont respectivement raccordées à des sorties 34, 35 du diviseur 3 de flux distinctes de la sortie 33 du diviseur 3 de flux couplée au spectromètre 2 de masse.

De préférence, l'une des sorties 42, 43 de fluide de chaque commutateur 4 fluidique est équipée d'une conduite 6 de raccordement à un port 7 olfactométrique ou à un collecteur 8. Dans l'exemple représenté, la sortie 42 de l'un des commutateurs, dit premier commutateur, est reliée à un port 7 olfactométrique et l'autre sortie 43 dudit commutateur à un dispositif 8 de détection et/ou d'analyse via à chaque fois une conduite 6 de raccordement. Les sorties 42 et 43 de l'autre commutateur, dit deuxième commutateur, sont reliées chacune via une conduite 6 de raccordement à un collecteur 8.

A nouveau, la liaison fluidique entre la sortie 33 de fluide du diviseur 3 de flux et le spectromètre 2 de masse d'une part, et la liaison fluidique entre la ou une sortie 34, 35 de fluide du diviseur 3 de flux et l'extrémité 61 de raccordement à un port 7 olfactif ou à un collecteur 8 ou à un dispositif 8 d'analyse et/ou de détection d'une conduite 6 de raccordement apte à être alimentée par ladite sortie 34, 35 de fluide d'autre part sont configurées de sorte que le temps de parcours de l'éluat entre chaque sortie 34, 35 de fluide du diviseur 3 de flux et l'extrémité 6 de raccordement à un port 7 olfactif, ou à un collecteur ou à un dispositif 8 d'analyse et/ou de détection d'une conduite 6 de raccordement apte à être alimentée par ladite sortie 34, 35 de fluide est identique au temps de parcours de l'éluat entre la sortie 33 de fluide du diviseur 3 de flux et le spectromètre 2 de masse.

On procède à nouveau de préférence en deux temps, de manière similaire à ce qui a été décrit ci-dessus pour l'architecture de base de l'installation.

Ce type d'architecture offre de nombreuses possibilités. Un des intérêts est de pouvoir choisir une configuration symétrique sur les sorties des deux commutateurs et de travailler sur ces deux commutateurs de manière identique. Par exemple, en disposant un port olfactif sur une sortie de chacun des commutateurs, on peut faire évaluer à deux juges la même sélection de molécules en évacuant les autres molécules vers un collecteur ou une fuite raccordés à l'autre sortie de chacun des deux commutateurs.

Dans un autre type d'utilisation, en raccordant un collecteur à l'une des sorties de chaque commutateur, on peut par addition ou omission de certaines molécules, récupérer deux sélections identiques de molécules en mélange, en vue par exemple d'une évaluation sensorielle ultérieure.

Egalement, en raccordant un collecteur aux deux sorties de chacun des commutateurs, on peut récupérer dans deux collecteurs une sélection de molécules et dans les deux autres collecteurs la part complémentaire conformément aux intérêts précités.

La réalisation d'expérience en double représente un avantage en termes de gain de temps et de reproductibilité.

Chaque commutateur étant indépendamment programmable, il est également possible, en conservant une configuration symétrique sur chaque commutateur, de travailler différemment sur chacun d'entre eux. Il est ainsi possible par exemple de faire évaluer des sélections différentes de molécules en sortie de deux ports olfactifs raccordés à l'une des sorties de chacun des deux commutateurs.

Dans un autre type d'utilisation, en raccordant un collecteur à l'une des sorties de chaque commutateur, on peut par addition ou omission de certaines molécules, récupérer deux sélections différentes de molécules en mélange issues d'un même échantillon, en vue par exemple d'une évaluation sensorielle ultérieure.

Egalement, en équipant les deux commutateurs de deux collecteurs, on peut collecter deux mélanges différents de molécules dans deux collecteurs, ainsi que leur part complémentaire respective dans les deux autres collecteurs, soit quatre mélanges différents de molécules issues d'un même échantillon en une seule injection.

Enfin tous les raccordements étant envisageables en termes de détection/collecte, il est également possible de réaliser simultanément lors d'une même injection, une analyse olfactométrique d'une sélection ou de l'ensemble des molécules de l'échantillon sur l'un des commutateurs raccordé pour l'une de ses sorties à un port olfactométrique, et sur l'autre commutateur dont l'une ou les deux sorties sont raccordées à un collecteur, de procéder à la récupération d'un mélange de molécules et le cas échéant de sa part complémentaire, en vue par exemple d'une évaluation sensorielle ultérieure.

Généralement, le pilotage des moyens 54 d'obturation de chaque commutateur fluidique s'opère automatiquement, l'opérateur ayant entré les instants de commutation en fonction des résultats fournis par le spectromètre. Une autre solution moins précise consisterait à piloter manuellement les moyens d'obturation.

## Revendications

1. Installation d'analyse d'un éluat de chromatographe (1), ladite installation comprenant :
- un chromatographe (1) en phase gazeuse équipé d'une sortie (13) d'éluat,
- un spectromètre (2) de masse apte à fournir en sortie des données représentatives du résultat de l'analyse spectrométrique d'au moins une quote-part de l'éluat,
- au moins un diviseur (3) de flux comprenant deux entrées (31, 32) et au moins deux sorties (33, 34, 35) de fluide, lesdites entrées (31, 32) étant l'une (31), couplée à une source (30) de gaz sous pression, l'autre (32), dite entrée d'éluat, couplée à la sortie (13) d'éluat du chromatographe (1), l'une (33) des sorties (33, 34, 35) du diviseur (3) de flux étant couplée à l'entrée (21) du spectromètre (2) de masse,
- au moins un commutateur (4) fluidique comprenant au moins une entrée (41) et deux sorties (42, 43) de fluide respectivement en communication fluidique avec ladite entrée (41) de fluide par une conduite (44, 45) de circulation de fluide, et un dispositif (5) de commande du commutateur (4) apte à permettre une alimentation sélective en fluide desdites sorties (42, 43) de fluide par ladite entrée (41) de fluide, ce dispositif (5) de commande du commutateur (4) comprenant au moins un circuit de circulation de fluide comportant au moins deux voies (51, 52) de circulation raccordées en entrée à une source (53) de gaz sous pression et débouchant en sortie l'une (51), dans une conduite (44), l'autre (52) dans l'autre conduite (45) de circulation de fluide du commutateur, lesdites voies (51, 52) de circulation étant des voies sélectivement obturables par des moyens d'obturation (54), configurées pour, à l'état obturé de l'une des voies, laisser libre la conduite de circulation de fluide associée à ladite voie dans laquelle ladite voie débouche et permettre l'évacuation de fluide par ladite conduite de circulation de fluide, **caractérisée en ce que** l'entrée (41) de fluide du ou d'au moins l'un des commutateurs (4) fluidiques est raccordée à une sortie (34, 35) de fluide du diviseur (3) de flux distincte de la sortie (33) de flux du diviseur (3) de flux couplée au spectromètre (2) de masse.

2. Installation d'analyse selon la revendication 1,
**caractérisée en ce que** les moyens (54) d'obturation des voies (51, 52) sélectivement obturables du circuit de circulation de fluide du dispositif (5) de commande du ou de chaque commutateur (4) fluidique sont des moyens (54) d'obturation pilotables au moins en fonction des données fournies par le spectromètre (2) de masse.

3. Installation d'analyse selon l'une des revendications 1 ou 2,
**caractérisée en ce que** les voies (51, 52) sélectivement obturables du circuit de circulation de fluide du dispositif (5) de commande du ou de chaque commutateur (4) fluidique présentent, depuis leur débouché dans la conduite (44, 45) de circulation de fluide à laquelle elles sont associées en direction de leur zone de raccordement à la source (53) de gaz sous pression, une section individuelle suivie d'une section commune à l'autre voie et **en ce que** les moyens (54) d'obturation desdites voies (51, 52) sont formés par un commutateur mécanique disposé dans la zone de transition entre la section commune et les sections individuelles desdites voies (51, 52).

4. Installation d'analyse selon l'une des revendications 1 à 3,
**caractérisée en ce qu'**au moins l'une des sorties (42, 43) de fluide du ou de chaque commutateur (4) fluidique est équipée d'une conduite (6) de raccordement à un port (7) olfactométrique ou à un collecteur (8) ou à un dispositif (8) de détection et/ou d'analyse.

5. Installation d'analyse selon la revendication 4,
caractérisée en que le dispositif (8) de détection et/ou d'analyse est choisi de préférence dans le groupe formé par les détecteurs à ionisation de flamme (FID), les détecteurs thermoïoniques (NPD), les détecteurs à absorption électronique (ECD), les détecteurs électriques (TCD), les détecteurs à photomètre de flamme (FPD).

6. Installation d'analyse selon l'une des revendications 4 ou 5,
**caractérisée en ce que** la liaison fluidique entre la sortie (33) de fluide du diviseur (3) de flux et le spectromètre (2) de masse d'une part, et la liaison fluidique entre la ou une sortie (34, 35) de fluide du diviseur (3) de flux et l'extrémité (61) de raccordement à un port (7) olfactif ou à un collecteur (8) ou à un dispositif (8) d'analyse et/ou de détection d'une conduite (6) de raccordement apte à être alimentée par ladite sortie (34, 35) de fluide d'autre part, sont configurées de sorte que le temps de parcours de l'éluat entre chaque sortie (34, 35) de fluide du diviseur (3) de flux et l'extrémité de raccordement à un port (7) olfactif, ou à un collecteur (8) ou à un dispositif (8) d'analyse et/ou de détection de ladite conduite (6) de raccordement apte à être alimentée par ladite sortie (34, 35) de fluide est identique au temps de parcours de l'éluat entre la sortie (33) de fluide du diviseur (3) de flux et le spectromètre (2) de masse.

7. Installation d'analyse selon l'une des revendications 1 à 6,
**caractérisée en ce que** le diviseur (3) de flux est du type à au moins trois sorties (33, 34, 35) de fluide et **en ce que** l'installation comporte au moins deux commutateurs (4) fluidiques dont les entrées (4) de fluide sont respectivement raccordées à des sorties (34, 35) du diviseur (3) de flux distinctes de la sortie (33) du diviseur (3) de flux couplée au spectromètre (2) de masse.

8. Installation d'analyse selon la revendication 7,
**caractérisée en ce que** l'une des sorties (42, 43) de fluide d'au moins l'un des commutateurs (4) fluidiques est équipée d'une conduite (6) de raccordement à un port (7) olfactif.

9. Installation selon l'une des revendications 7 ou 8,
**caractérisée en ce que** l'une des sorties (42, 43) de fluide d'au moins l'un des commutateurs (4) fluidiques est équipée d'une conduite (6) de raccordement à un collecteur (8).

10. Procédé d'analyse d'un éluat de chromatographe (1) à l'aide d'une installation conforme à l'une des revendications 1 à 9, **caractérisé en ce que** ledit procédé comprend une étape de division du flux d'éluat en au moins deux flux dits premier et deuxième flux, une étape consistant à amener au moins une partie du premier flux au spectromètre (2) et au moins une partie du deuxième flux à l'entrée de fluide du ou d'un desdits commutateurs (4) fluidiques commutateur (4) fluidique à au moins deux sorties (42, 43) de fluide aptes à être sélectivement alimentées en fluide à partir d'une entrée (41) de fluide du commutateur (4) à l'aide d'un dispositif (5) de commande piloté en fonction de données fournies par le spectromètre (2).

## Patentansprüche

1. Anlage zur Analyse eines chromatographischen Eluats (1), wobei die Anlage umfasst:
- einen mit einem Eluatausgang (13) ausgestatteten Gasphasenchromatographen (1),
- ein Massenspektrometer (2), das imstande ist, am Ausgang repräsentative Daten des Ergebnisses der spektrometrischen Analyse mindestens eines Anteils des Eluats zu liefern,
- mindestens einen Flusstrenner (3), der zwei Fluideingänge (31, 32) und mindestens zwei Fluidausgänge (33, 34, 35) umfasst, wobei einer (31) der Eingänge (31, 32) mit einer Druckgasquelle (30) verbunden ist, wobei der andere (32), als Eluateingang bezeichnete Eingang mit dem Eluatausgang (13) des Gasphasenchromatographen (1) verbunden ist, wobei einer (33) der Ausgänge (33, 34, 35) des Flusstrenners (3) mit dem Eingang (21) des Massenspektrometers (2) verbunden ist,
- mindestens einen Fluidschalter (4), der mindestens einen Fluideingang (41) und zwei Fluidausgänge (42, 43) umfasst, die jeweils über eine Fluidzirkulationsleitung (44, 45) mit dem Fluideingang (41) in Fluidkommunikation sind, und eine Steuervorrichtung (5) des Schalters (4), die imstande ist, eine selektive Fluidversorgung der Fluidausgänge (42, 43) durch den Fluideingang (41) zu erlauben, wobei diese Steuervorrichtung (5) des Schalters (4) mindestens einen Fluidzirkulationskreis umfasst, der mindestens zwei Zirkulationswege (51, 52) aufweist, die am Eingang mit einer Druckgasquelle (53) verbunden sind und von denen am Ausgang einer (51) in eine Fluidzirkulationsleitung (44), der andere (52) in die andere Fluidzirkulationsleitung (45) des Fluidschalters ausmündet, wobei die Zirkulationswege (51, 52) durch Verschlussmittel (54) selektiv verschließbare Wege sind, die konfiguriert sind, um, im verschlossenen Zustand einer der Wege, die dem Weg zugeordnete Fluidzirkulationsleitung frei zu lassen, in welche der Weg ausmündet und die Fluidableitung durch die Fluidzirkulationsleitung zu erlauben,
**dadurch gekennzeichnet, dass** der Fluideingang (41) des oder mindestens einer der Fluidschalter (4) mit einem Fluidausgang (34, 35) des Flusstrenners (3) verbunden ist, der sich von dem Flussausgang (33) des Flusstrenners (3) unterscheidet, der mit dem Massenspektrometer (2) verbunden ist.

2. Analyseanlage nach Anspruch 1,
**dadurch gekennzeichnet, dass** die Verschlussmittel (54) der selektiv verschließbaren Wege (51, 52) des Fluidzirkulationskreises der Steuervorrichtung (5) des oder jedes Fluidschalters (4) Verschlussmittel (54) sind, die mindestens in Abhängigkeit von den von dem Massenspektrometer (2) gelieferten Daten steuerbar sind.

3. Analyseanlage nach einem der Ansprüche 1 oder 2,
**dadurch gekennzeichnet, dass** die selektiv verschließbaren Wege (51, 52) des Fluidzirkulationskreises der Steuervorrichtung (5) des oder jedes Fluidschalters (4) ab ihrer Ausmündung in die Fluidzirkulationsleitung (44, 45), mit der sie in Richtung ihrer Verbindungszone mit der Druckgasquelle (53) verbunden sind, einen individuellen Querschnitt aufweisen, gefolgt von einem gemeinsamen Querschnitt mit dem anderen Weg, und dass die Verschlussmittel (54) der Zirkulationswege (51, 52) von einem mechanischen Schalter gebildet sind, der in der Übergangszone zwischen dem gemeinsamen Querschnitt und den individuellen Querschnitten der Zirkulationswege (51, 52) angeordnet sind.

4. Analyseanlage nach einem der Ansprüche 1 bis 3,
**dadurch gekennzeichnet, dass** mindestens einer der Fluidausgänge (42, 43) des oder jedes Fluidschalters (4) mit einer Anschlussleitung (6) an einen olfaktometrischen Port (7) oder an einen Sammler (8) oder an eine Erfassungs- und/oder Analysevorrichtung ausgestattet ist.

5. Analyseanlage nach Anspruch 4,
**dadurch gekennzeichnet, dass** die Erfassungs- und/oder Analysevorrichtung vorzugsweise aus der Gruppe ausgewählt ist, die von den Flammenionisationsdetektoren (FID), den thermoionischen Detektoren (NPD), den Elektroneneinfangdetektoren (ECD), den elektrischen Detektoren (TCD), den flammenfotometrischen Detektoren (FPD) gebildet ist.

6. Analyseanlage nach einem der Ansprüche 4 oder 5,
**dadurch gekennzeichnet, dass** die Fluidverbindung zwischen dem Fluidausgang (33) des Flusstrenners (3) und dem Massenspektrometer (2) zum einen und der Fluidverbindung zwischen dem oder einem Fluidausgang (34, 35) des Flusstrenners (3) und dem Verbindungsende (61) mit einem olfaktorischen Port (7) oder mit einem Sammler (8) oder mit einer Analyse- und/oder Detektionsvorrichtung (8) einer Anschlussleitung (6), die imstande ist, von dem Fluidausgang (34, 35) versorgt zu werden, zum anderen derart konfiguriert sind, dass die Durchlaufzeit des Eluats zwischen jedem Fluidausgang (34, 35) des Flusstrenners (3) und dem Verbindungsende (6) mit einem olfaktorischen Port (7) oder mit einem Sammler (8) oder mit einer Analyse- und/oder Detektionsvorrichtung (8) der Anschlussleitung (6), die imstande ist, von dem Fluidausgang (34, 35) versorgt zu werden, mit der Durchlaufzeit des Eluats zwischen dem Fluidausgang (33) des Flusstrenners (3) und dem Massenspektrometer (2) identisch ist.

7. Analyseanlage nach einem der Ansprüche 1 bis 6,
**dadurch gekennzeichnet, dass** der Flusstrenner (3) der Bauart mit mindestens drei Fluidausgängen (33, 34, 35) ist und dass die Anlage mindestens zwei Fluidschalter (4) aufweist, deren Fluideingänge (4) jeweils mit Ausgängen (34, 35) des Flusstrenners (3) verbunden sind, die sich von dem mit dem Massenspektrometer (2) verbundenen Ausgang (33) des Flusstrenners (3) unterscheiden.

8. Analyseanlage nach Anspruch 7,
**dadurch gekennzeichnet, dass** einer der Fluidausgänge (42, 43) von mindestens einem der Fluidschalter (4) mit einer Anschlussleitung (6) an einen olfaktorischen Port (7) ausgestattet ist.

9. Anlage nach einem der Ansprüche 7 oder 8,
**dadurch gekennzeichnet, dass** einer der Fluidausgänge (42, 43) von mindestens einem der Fluidschalter (4) mit einer Anschlussleitung (6) an einen Sammler (8) ausgestattet ist.

10. Verfahren zur Analyse eines chromatographischen Eluats (1) mit Hilfe einer Anlage nach einem der Ansprüche 1 bis 9, **dadurch gekennzeichnet, dass** das Verfahren einen Schritt der Teilung des Eluatflusses in mindestens zwei Flüsse, einen ersten und einen zweiten Fluss genannt, einen Schritt, der darin besteht, mindestens einen Teil des ersten Flusses dem Spektrometer (2) und mindestens einen Teil des zweiten Flusses dem Fluideingang des oder einer der Fluidschalter (4) mit mindestens zwei Fluidausgängen (42, 43) zuzuführen, die imstande sind, ab einem Fluideingang (41) des Schalter (4) mit Hilfe einer in Abhängigkeit von den von dem Massenspektrometer (2) gelieferten Daten gesteuerten Steuervorrichtung (5) selektiv mit Fluid versorgt zu werden.

## Claims

1. An installation for analyzing a chromatography eluate (1), said installation comprising:
- a chromatograph (1) in gaseous phase equipped with an eluate outlet (13),
- a mass spectrometer (2) able to provide, at its output, data representative of the result of the spectrometric analysis of at least a portion of the eluate,
- at least one flow divider (3) comprising two fluid inlets (31, 32) and at least fluid two outlets (33, 34, 35), one (31) of said inlets (31, 32) being coupled to a pressurized gas source (30), the other (32), called eluate inlet, being coupled to the eluate outlet (13) of the chromatograph (1), one (33) of the outlets (33, 34, 35) of the flow divider (3) being coupled to the inlet (21) of the mass spectrometer (2),
- at least one fluid switch (4) comprising at least one inlet (41) and two fluid outlets (42, 43) respectively in fluid communication with said fluid inlet (41) by a fluid flow line (44, 45), and a control device (5) for the switch (4) able to allow a selective supply of fluid for said fluid outlet (42, 43) by said fluid inlet (41), this control device (5) of the switch (4) comprising at least one fluid flow circuit including at least two flow paths (51, 52) connected at their inlet to a pressurized gas source (53) and emerging at their outlet for one (51), in a line (44), the other (52) in the other fluid flow line (45) of the switch, said flow paths (51, 52) being selectively closable by closing off means (54) configured, in the closed off state of one of the paths, to leave the fluid flow line associated with that path free in which said line emerges and allow the discharge of fluid by said fluid flow line, **characterized in that** the fluid inlet (41) of the or at least one of the fluid switches (4) is connected to a fluid outlet (34, 35) of the flow divider (3) separate from the flow outlet (33) of the flow divider (3) coupled to the mass spectrometer (2).

2. The analysis installation according to claim 1,
**characterized in that** the means (54) for closing off the selectively closable paths (51, 52) of the fluid flow circuit of the device (5) for controlling the or each fluid switch (4) are closing off means (54) controllable at least as a function of data provided by the mass spectrometer (2).

3. The analysis installation according to one of claims 1 or 2,
**characterized in that** the selectively closable paths (51, 52) of the fluid flow circuit of the device (5) for controlling the or each fluid switch (4) have, from their outlet in the fluid flow line (44, 45) with which they are associated in the direction of their connecting zone to the pressurized gas source (53), an individual section followed by a section shared by the other path, and **in that** the means (54) for closing off said paths (51, 52) are formed by a mechanical switch positioned in the transitional zone between the shared section and the individual sections of said paths (51, 52).

4. The analysis installation according to one of claims 1 to 3,
**characterized in that** at least one of the fluid outlets (42, 43) of the or each fluid switch (4) is equipped with a line (6) for connecting to an olfactometric port (7) or collector (8) or a detection and/or analysis device (8).

5. The analysis installation according to claim 4,
**characterized in that** the detection and/or analysis device (8) is preferably chosen from the group made up of flame ionization detectors (FID), nitrogen-phosphorus detectors (NPD), electron capture detectors (ECD), thermal conductivity detectors (TCD), flame photometric detectors (FPD).

6. The analysis installation according to one of claims 4 or 5,
**characterized in that** the fluid connection between the fluid outlet (33) of the flow divider (3) and the mass spectrometer (2) on the one hand, and the fluid connection between the or one fluid outlet (34, 35) of the flow divider (3) and the end (61) for connecting to an olfactory port (7) or a collector (8) or an analysis and/or detection device (8) of the connecting line (6) able to be supplied by said fluid outlet (34, 35) on the other hand, are configured such that the travel time of the eluate between each fluid outlet (34, 35) of the flow divider (3) and the end for connecting to an olfactory port (7), or a collector (8) or an analysis and/or detection device (8) of said connecting line (6) able to be supplied by said fluid outlet (34, 35), is identical to the travel time of the eluate between the fluid outlet (33) of the flow divider (3) and the mass spectrometer (2).

7. The analysis installation according to one of claims 1 to 6,
**characterized in that** the flow divider (3) is of the type with at least three fluid outlets (33, 34, 35) and **in that** the installation includes at least two fluid switches (4) whereof the fluid inlets (4) are respectively connected to outlets (34, 35) of the flow divider (3) that are separate from the outlet (33) of the flow divider (3) coupled to the mass spectrometer (2).

8. The analysis installation according to claim 7,
**characterized in that** one of the fluid outlets (42, 43) of least one of the fluid switches (4) is equipped with a line (6) for connecting to an olfactory port (7).

9. The installation according to one of claims 7 or 8,
**characterized in** one of the fluid outlets (42, 43) of at least one of the fluid switches (4) is equipped with a line (6) for connecting to a collector (8).

10. A method for analyzing a chromatograph eluate (1) using an installation according to one of claims 1 to 9, **characterized in that** said method comprises a step for dividing the flow of eluate into at least two flows called first and second flows, a step consisting of bringing at least part of the first flow to the spectrometer (2) and at least part of the second flow at the fluid inlet of the or one of the fluid switches (4) to at least two fluid outlets (42, 43) able to be selectively supplied with fluid from a fluid inlet (41) of the switch (4) using a control device (5) steered based on data provided by the spectrometer (2).
